# EUROPÄISCHE PATENTANMELDUNG

(11) **EP 0 729 089 A1**
(43) Veröffentlichungstag der Anmeldung: **28.08.1996**
(21) Anmeldenummer: 96100376.1
(22) Anmeldetag: 12.01.1996
(51) Int. Cl.: G06F 1/16, A45C 5/12

(54) **EDV-System-Koffer**

(30) Priorität: 27.02.1995 DE 19506740
(71) Anmelder: PARAT-WERK SCHÖNENBACH GmbH + Co KG, D-42897 Remscheid (DE)
(72) Erfinder: Krieg, Heinrich, D-94089 Neureichenau (DE); Gruber, Alfred, D-94089 Neureichenau (DE)
(74) Vertreter: Patentanwälte Ostriga & Sonnet

(57) **Zusammenfassung**

Dargestellt und beschrieben ist ein Koffer zur Aufnahme eines Computers (Notebooks), eines Druckers sowie Zubehör wie Netzteil, Kabel, Maus und Papier. Mit Ausnahme des Computers und ggf. der Maus verbleiben alle übrigen Systemkomponenten in dem geöffneten, nahe dem Benutzer auf dem Boden stehenden Koffer. Dieser hält den Drucker in einer ergonomisch günstigen, relativ hohen Bedienposition in Bereitschaft. Lediglich ein in der Höhe kurzer Frontwandteil ist aus der Frontwandebene herausklappbar, und der dadurch sich ausbildende Scheitel dient als Auflager für eine Drucker-Tragplatte. Diese ist schwenkbar an einem Trennwandteil angelenkt und gemeinsam in vertikaler Verstaulage zwischen seitlichen Aufnahmen im Koffer gehalten. Die Aufnahmen sind als Schiebeführungen ausgebildet, so daß Drucker-Tragplatte mit Drucker und dem trennwandteil zunächst angehoben werden können, bis das Gelenk zwischen den beiden Platten aus der Führung freikommt und sich daraufhin der Drucker in seine Bedienlage mit Auflagerung auf dem Scheitel des heruntergeklappten oberen Frontwandteils schwenken läßt.

## Beschreibung

Die Erfindung bezieht sich auf ein Tragebehältnis wie Koffer, Tasche od. dgl. für einen tragbaren Computer, einen Drucker und Zubehör, wie Netzteil, Kabel, Maus, Druckerpapier od. dgl., mit einer Frontwand und einem in einem, ein Computer-Aufnahmefach von einem weiter im Behälterinnern gelegenen Drucker-Aufnahmefach abgrenzenden, in seitlichen Aufnahmen gehaltenen Trennwandteil, an dessen oberem Rand ein Drucker-Tragkörper zwischen einer im wesentlichen vertikalen Drucker-Verstaulage und einer zumindest annähernd horizontalen Drucker-Bedienlage um eine horizontale Achse umlegbar angelenkt ist, wobei nach Öffnen des Behältnis-Deckelteils zumindest ein Frontwandteil des Behältnisses ausklappbar angeordnet ist und dadurch Raum gibt zum erleichterten Ergreifen des Computers sowie zum Umlegen des Drucker-Tragkörpers, der nach Entnahme des Computers auf einem dem Frontwandteil zugeordneten Auflager in Bedienlage abstützbar ist.

Tragbare Computer, insbesondere sog. 'Notebooks' zeichnen sich vor allem durch ihre mobile Verwendbarkeit aus, woraus sich der Wunsch ableitet, geeignete Tragebehältnisse für den Computer, den zugehörigen Drucker und die zu ihrem Betrieb erforderlichen Zubehörteile verfügbar zu haben.

Bekannt ist ein zweischaliger Koffer, in dessen Bodenteil Gefache untergebracht sind zur Aufnahme der Stromversorgung, der Kabel und der einzelnen Geräte, während der Deckelteil im geschlossenen Zustand des Koffers diese Teile schützt und ggf. noch Aufnahmetaschen für Papier, Dokumente, Schreibutensilien od.dgl. beherbergt. Die Handhabung des Koffers vollzieht sich so, daß sein Deckelteil vom Bodenteil abgenommen und dieser dann mit allen in ihm aufgenommenen Gerätschaften auf den Arbeitstisch gelegt wird, so daß am Computer gearbeitet werden kann. Dies erfordert auf dem Arbeitstisch eine relativ große Arbeitsfläche und wird auch aus anderen Gründen, z.B. wegen des Gesamtgewichts dieser Einheit als störend empfunden.

Da die Hauptarbeit an dem Computer geleistet wird, der selbst nur einen geringen Platz beansprucht, wohingegen der über ein Druckeranschlußkabel mit ihm verbundene Drucker auch an anderer Stelle als auf dem Tisch seine Funktion erfüllen kann, ist ein Koffer entwickelt worden, der ebenfalls alle zum Betrieb des Computers und seines Zubehörs notwendigen Teile aufnimmt, dem jedoch für die Arbeit am Computer nur dieser entnommen wird, während die anderen Teile des EDV-Systems, so insbesondere der Drucker, im Koffer verbleibt.

Ein solcher Koffer, von dem die Erfindung ausgeht, weist einen Bodenrahmen, zwei Seitenwände, eine Frontwand und eine Rückwand sowie an seiner Oberseite einen Klappdeckel zum Verschluß des Koffers auf. Im Innern des Koffers sind mehrere Aufnahmefächer, so insbesondere eines für den Computer und eines für den Drucker vorgesehen. Die Frontwand ist am Bodenrahmen um eine unten liegende, horizontale Achse schwenkbar angelenkt und läßt sich aus der Lotrechten in eine Neigelage von etwa 45^{o} nach vorn abklappen, nachdem der schalenartige Kofferdeckel geöffnet worden ist. Mit dem Ausklappen der Frontwand schwenkt der Computer teilweise aus dem Innenraum des Tragebehältnisses heraus und läßt sich so besser als bei senkrecht stehender Frontwand entnehmen.

Das Aufnahmefach für den Computer wird von der ausklappbaren Frontwand einerseits und andererseits von einer Trennwand begrenzt, auf deren dem Computer abgewandten Seite weiter innen im Tragebehältnis der Drucker angeordnet ist. Diese Trennwand besteht aus einer in seitliche Halterungen eingesteckten Platte und einem schalenartigen Drucker-Tragkörper, dessen Boden mit der Platte über Scharniere gelenkig verbunden ist. Sind der Kofferdeckel geöffnet, die Frontwand ausgeklappt und der Computer entnommen, läßt sich der Druckertragkörper um etwa 90^{o} ebenfalls nach vorn und zum Teil aus dem Behälterinnenraum herausklappen, bis sein Boden auf Stützen auftrifft, die an der Innenseite der Frontwand besonders angebracht sind. Der Drucker steht in dieser seiner Bedienlage so bereit, daß er, wenn das Tragebehältnis auf dem Boden steht, vom sitzenden Computerbenutzer bedient werden kann, sofern er sich nur weit genug vornüber- und hinunterbeugt.

Dieses kofferartige Tragebehältnis, von dem die Erfindung ausgeht, ist bereits erheblich vorteilhafter und in der Bedienung sinnvoller und geschickter eingerichtet als der eingangs beschriebene zweischalige Koffer, läßt aber noch einige Wünsche offen. So wird es beispielsweise noch als Nachteil empfunden, daß nach Öffnen des Deckels die Frontwand mit dem an ihr anliegenden Computer selbsttätig nach vorn abklappen und aufgrund des resultierenden Schwungmoments die Tasche zum Kippen bringen kann. Da der im vordersten Aufnahmefach nahe der ausklappbaren Frontwand im Behältnis aufgenommene Drucker zusammen mit der Frontwand herausklappt und mit seinem Boden auf der Innenseite der Frontwand liegt, ist es nicht ohne weiteres möglich, ihn lediglich mit einer Hand zu ergreifen, was aufgrund des geringen Gewichts insbesondere von Notebooks an sich aber leicht geschehen könnte. Ein weiterer Nachteil besteht darin, daß im Bedienzustand des Behältnisses, also bei entnommenem Computer, ausgeklappter Frontwand und umgelegtem Drucker-Tragkörper ein unbeabsichtigter Stoß gegen die Frontwand dazu führen kann, daß diese den Druckertragkörper und also den Drucker wieder aus der Bedienlage kippen kann, wodurch Schäden an der Einrichtung entstehen können. Durch das Umlegen des Drucker-Tragkörpers aus der im wesentlichen lotrechten Drucker-Verstaulage in dessen horizontale Bedienlage ist überdies nur ein relativ bodennahes Arbeitsniveau des Druckers erreichbar.

Hier setzt die Erfindung ein. Ihr liegt im wesentlichen die Aufgabe zugrunde, ein Tragebehältnis der im Oberbegriff des Anspruches 1 näher umrissenen Art mit einfachen Mitteln so auszugestalten, daß nennenswerte Bedienungsvorteil erreicht werden.

Die Erfindung, die diese Aufgabe löst, ist im Anspruch 1 angegeben. Sie ist im wesentlichen und in erster Linie dadurch gekennzeichnet, daß die Frontwand in einen festen, unteren Frontwandteil und in einen um eine horizontale Achse abklappbar an diesem angelenkten, oberen Frontwandteil unterteilt ist und daß der bei abgeklapptem oberem Frontwandteil von der Anlenkung definierte Scheitelbereich der Frontwandteile das Auflager zur Abstützung des Druckers in seiner Bedienlage ausbildet.

Im Unterschied zum Stand der Technik ist bei dem erfindungsgemäßen Tragebehältnis nicht die gesamte Frontwand aufklappbar, sondern nur ein oberer, in der Höhe kurzer Frontwandteil, der an dem ansonsten am Koffer festgelegten unteren Frontwandteil schwenkbar angelenkt ist. Nach Öffnen des Deckels läßt sich also nur der obere Abschnitt der Behältnisfront ausschwenken. Der von seiner Anlenkung definierte Scheitelbereich bleibt dabei fest in der Frontwandebene des Tragebehältnisses und dient als Auflager zur Abstützung des Drucker-Tragkörpers in der Bedienlage des Druckers.

Anders als beim Stand der Technik stützt sich daher der Drucker mit seinem Gewicht im wesentlichen in der Ebene der Kofferfront ab und nicht mit deutlichem Abstand außen vor dieser. Dadurch wird ein insgesamt sehr günstiges Schwerpunktverhalten des in Bedienposition gebrachten Tragebehältnisses erreicht. Da sich der Drucker-Tragkörper nicht wie beim Stand der Technik auf dem beweglichen Teil der Frontwand abstützt, sondern auf dem wandfest verbleibenden Scheitelbereich, läßt sich der Drucker auch nicht unbeabsichtigt kippen, indem man versehentlich Druck gegen das nunmehr starre untere Frontwandteil ausübt.

Dadurch, daß der untere Frontwandteil in der Frontwandebene des Behältnisses stehen bleibt, verlagert sich der im vordersten Aufnahmefach verstaute Computer nicht, wenn der obere Frontwandteil abgeklappt wird. Es ergeben sich also keine nach außen gerichteten Kräfte, die das Behältnis zum Kippen bringen könnten, wenn der Deckel des Behältnisses geöffnet wird. Zudem entsteht nach dem Aufklappen des Frontwandteils die einfache Möglichkeit, daß der obere Computerrandbereich freikommt, so daß der Computer leicht mit einer Hand ergriffen und aus seinem Aufnahmefach herausgenommen werden kann.

Eine vorteilhafte und geschickte Weiterbildung des erfindungsgemäßen Tragebehältnisses, mit dem eine optimierte Arbeitshöhe für den Drucker erreicht wird, besteht darin, daß die Höhe des abklappbaren, oberen Frontwandteils nur einen geringen Anteil an der Gesamthöhe der Behältnisfront bzw. des Behältnisses ausmacht, daß sowohl der Trennwandteil als auch der schwenkbar mit ihm verbundene Drucker-Tragkörper vertikal verschieblich und führbar in den seitlichen Aufnahmen angeordnet ist, deren obere Begrenzung etwa im gleichen Abstand vom Behältnisboden endet, in dem sich der Scheitelbereich befindet. Anders als beim Stand der Technik wird der Druckertragkörper nicht lediglich nach vorn umgelegt, sondern zunächst hochgehoben, bis die Schwenkachse, die den Druckertragkörper mit dem Trennwandteil verbindet, aus dem Bereich der seitlichen Führungen herausgekommen ist, so daß sich - erst jetzt, also in erhöhter Position - der Drucker aus seiner vertikalen Verstaulage in seine horizontale Bedienlage schwenken läßt. Damit kann die Arbeitsebene des Druckers, die beim Stand der Technik weit unten im Behälter liegt, sogar über das Niveau des Behälters nach oben verlagert werden. Handhabungen am Drucker lassen sich nunmehr in einer ergonomisch wesentlich angenehmeren Arbeitshöhe vollziehen, die weniger nachhaltiges Herunterbeugen aus der Sitzposition erfordert.

Dadurch, daß die seitlichen Führungen nicht nur, wie beim Stand der Technik, zur Aufnahme des Trennwandteils dienen, sondern auch zur Aufnahme eines Teiles des Drucker-Tragkörpers, kann der Drucker-Tragkörper in Verstaulage des Druckers allein durch formschlüssigen Eingriff mit den seitlichen Aufnahmen gesichert sein. Bei dem genannten Stand der Technik ist dies nicht möglich. Der schalenartige, mit seiner offenen Seite lotrecht im Behälter angeordnete Drucker-Tragkörper wird vielmehr mit Hilfe eines Klettverschlusses an einer weiteren Trennwand befestigt, die nahe der Behältnisrückwand angeordnet ist. Das Lösen und Wiederanbringen dieses Verschlusses kann bei dem erfindungsgemäßen Tragebehältnis entfallen. Dort reicht lediglich die Zugbewegung nach oben und eine sich nahtlos daran anschließende Schwenkbewegung nach vorn aus, um den Drucker aus der Ruhelage und seine Arbeitslage zu überführen.

Um unterschiedlichen Computergrößen Rechnung zu tragen und jeden Computer individuell so im Computer-Aufnahmefach anordnen zu können, daß er nach Öffnen des Deckels und des oberen Frontwandteils leicht ergriffen werden kann, ist das Tragebehältnis gekennzeichnet durch austauschbare Adapter-Einlagen, die den Computer im wesentlichen formschlüssig im Computer-Aufnahmefach des Behältnisses positionieren und ihm eine griffgünstige, möglichst hohe Position innerhalb des Behältnisses zuweisen, wobei die austauschbaren Einlagen aus die inneren Kofferecken ausfüllenden, im wesentlichen L-förmigen Formkörpern bestehen, deren Schenkelinnenseiten die unteren Eckbereiche des Computers zentrierend und vom Behältsnisboden distanzierend umgreifen.

Weiterhin vorteilhaft ist es, vor allem aufgrund der besonderen Einfachheit der Gestaltung, wenn gemäß einem weiteren Vorschlag der Erfindung der Drucker-Tragkörper aus einer dem Trennwandteil ähnlichen Platte besteht, an der der Drucker mit seinem Boden mit lösbaren Haltemitteln, wie komplementären Abschnitten eines aus Flauschband und Hakenband bestehenden Flächenhaftverschlusses, abnehmbar befestigt ist.

Durch einfache, geschickte Ausgestaltung des 'Innenlebens' des Tragebehältnisses dadurch, daß auf der dem Computer-Aufnahmefach abgewandten Seite des Drucker-Aufnahmefachs ein Freiraum geschaffen ist, der das selbsttätige Aufklappen einer im unteren Bereich des hochgezogenen, jedoch noch vertikal orientierten Druckers angelenkten Drucker-Abdeckklappe ermöglicht, wird eine weitere Bedienungserleichterung geschaffen.

Die Erfindung versteht sich am besten aus ihrer nachfolgenden Beschreibung anhand eines in den Zeichnungen dargestellten Ausführungsbeispiels. Darin zeigen:
- Fig. 1: eine Ansicht des geschlossenen Tragebehältnisses,
- Fig. 2: einen Längsschnitt durch das Behältnis nach Fig. 1 entsprechend der Schnittangabe II-II in Fig. 1,
- Fig. 3: einen Querschnitt entsprechend der Schnittangabe III-III in Fig. 2,
- Fig. 4: einen Längsschnitt durch das geöffnete Tragebehältnis mit aus ihm bereits entnommenem Computer und aus seiner Verstaulage angehobenem Drucker,
- Fig. 5: eine Darstellung entsprechend Fig. 4 mit dem Drucker in seiner Bedienlage und
- Fig. 6: eine Gesamtansicht des geöffneten Behältnisses mit in Bereitschaft befindlichem Computer und Drucker.

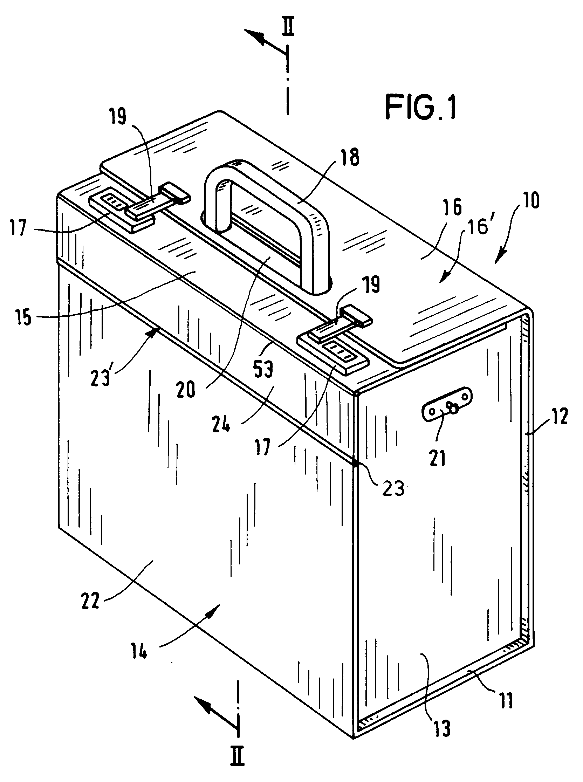

Das in Fig. 1 beispielhaft dargestellte und in seiner Gesamtheit mit 10 bezeichnete Tragebehältnis ist nach Art eines Pilotenkoffers gestaltet. Es umfaßt einen, ggf. auch als Rahmenkörper ausgestalteten, Boden 11, eine Rückwand 12, ferner zwei einander gegenüberliegende Seitenwände 13, sowie eine Frontwand 14 und eine zweiteiligen, aus einer innenliegenden Deckelklappe 15 und einer diese teilweise überfangenden außenliegenden Deckelklappe 16 bestehende Verschlußanordnung.

Die innenliegende Deckelklappe 15 weist zwei Schlösser 17 sowie einen schwenkbaren Griff 18 auf, und die außenliegende Deckelklappe 16 zwei Schließriegel 19 und einen Durchbruch 20 für den Durchgriff des Griffes 18. Mit 21 schließlich sind an den Seitenwänden 13 angebrachte Halterungen zum wiederentfernbaren Anstecken eines Tragegurtes bezeichnet.

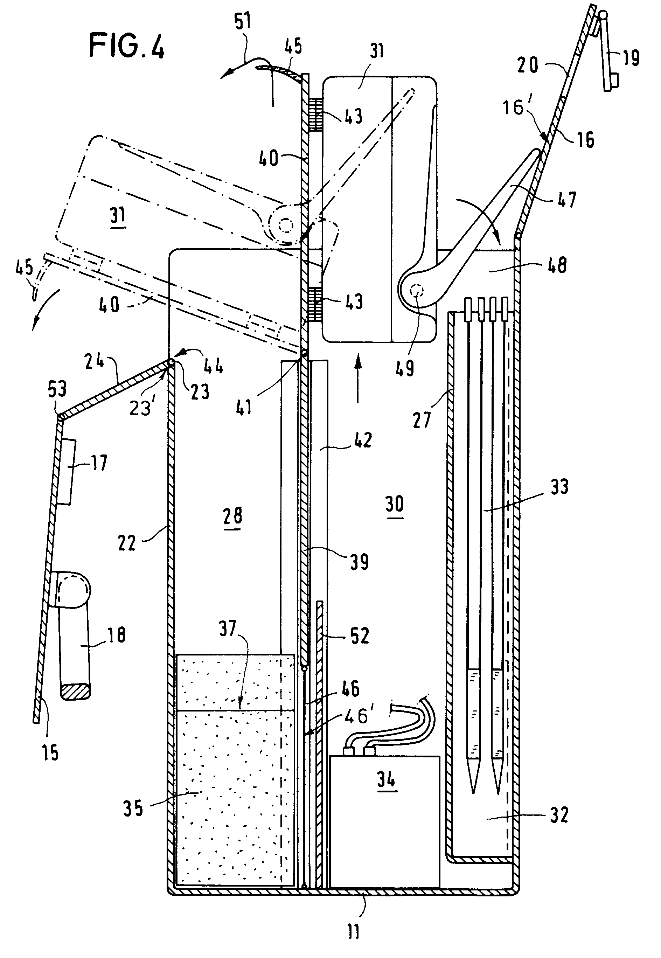

Eine aus Fig. 1 ersichtliche Besonderheit besteht darin, daß sich die Frontwand 14 in einen unteren, feststehenden Frontwandteil 22 und einen oberen, um eine horizontale Achse 23 schwenkbaren Frontwandteil 24 unterteilt. Die Höhen des feststehenden Frontwandteils 22 und des beweglichen Frontwandteils 24 addieren sich - etwa im Verhältnis 4/1 - zur Behälter-Gesamthöhe. Im übrigen stellt der obere bewegliche Frontwandteil 24 die Verbindung zwischen den feststehenden Frontwandteilen 22 und der innen liegenden Deckelklappe 15 her, wobei die Deckelklappe 15 und der Frontwandteil 24 (im rechten Winkel zueinander) starr oder aber - und zwar bevorzugt wie beim dargestellten Ausführungsbeispiel (s. insbes. Fig. 4 bis 6) - über eine im geschlossenen Zustand des Behältnisses kofferkantenbildende Falzung 53 oder Scharnierung beweglich miteinander verbunden sein können.

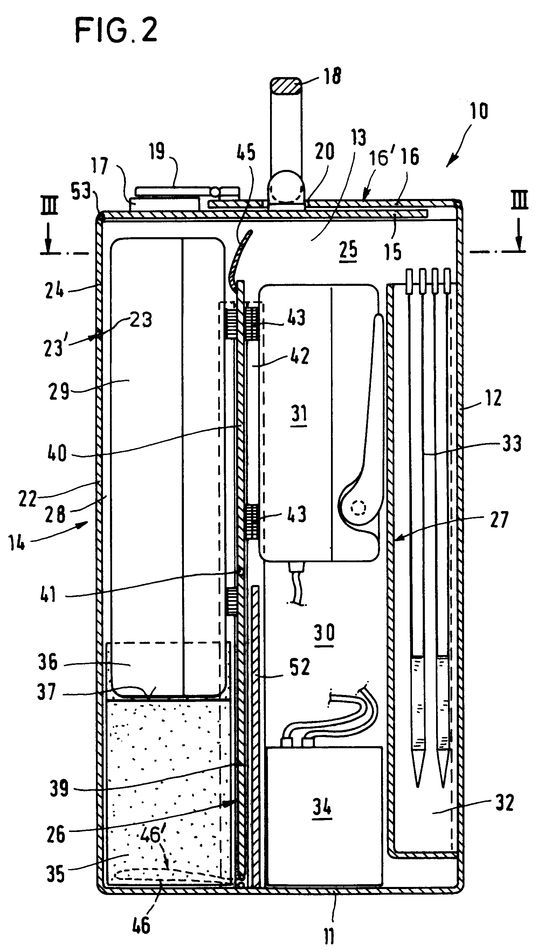

Wie sich aus dem Querschnitt der Fig. 2 ergibt, dient das Behälterinnere 25 zur Aufnahme zahlreicher, für den Betrieb eines tragbaren Computers, insbesondere eines Notebooks oder auch eines im Aussterben begriffenen Laptops, geeignete Aufnahmen. Durch zwei vertikale, sich längs durch den Innenraum 25 des Koffers 10 erstreckende Trennwände 26 und 27 ist frontwandseitig ein Aufnahmeraum 28 für einen Computer 29, daran anschließend ein Aufnahmeraum 30 für einen Drucker 31 und schließlich, der Rückwand 12 benachbart, ein Aufnahmeraum 32 für Druckerpapier, Geschäftspapier oder Aktenhefter 33 geschaffen. Bei dem in Fig. 2 konkret dargestellten Ausführungsbeispiel ist die Aufnahmefach-Unterteilung 27 nicht bloß eine Trennwand, sondern Teil eines eigenständigen, an der Behälterrückwand innen befestigten Tasche.

Der Drucker 31, der in nachfolgend beschriebener Weise in der in Fig. 2 dargestellten Verstaulage aufgenommen ist, gestattet aufgrund der heute üblichen miniaturisierten Bauweise die Anordnung weiterer Gegenstände, so z.B. eines Netzgerätes 34 in demselben Aufnahmefach 30 unter ihm. Auch nicht dargestellte Druckerkabel, eine Maus u.dgl. lassen sich dort verstauen.

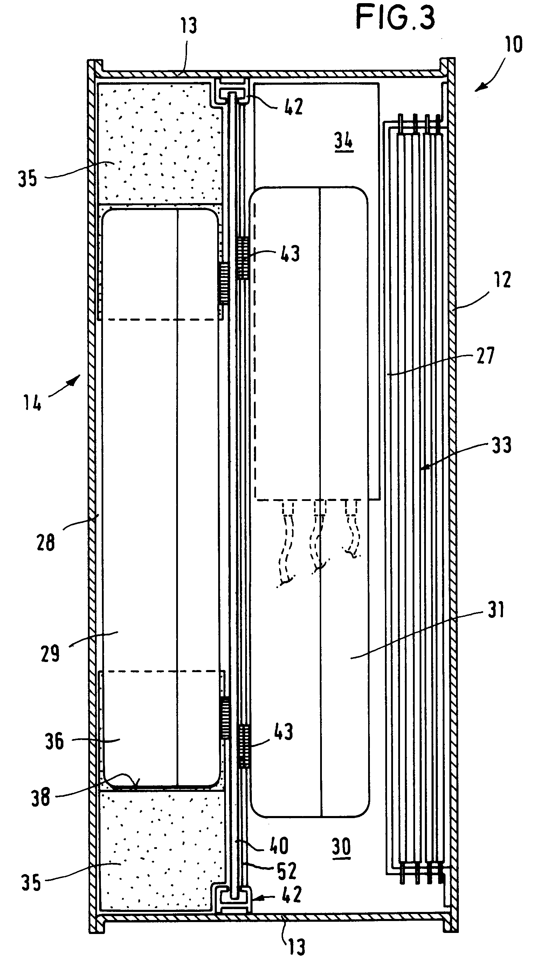

Zur Anpassung des von der Frontwand 14 begrenzten Aufnahmefachs 28 an die individuelle Größe bestimmter Marken oder Typen von Computer 29 sind zwei Formkörper 35 von im wesentlichen L-förmiger Grundgestalt als Adapter-Einlagen vorgesehen. Diese werden, wie aus den Fig. 2 und 3 erkennbar, in die unteren Ecken des Aufnahmefachs 28 derart eingelegt, daß der Computer 29 mit seinen unteren Eckbereichen 36 jeweils auf einem Horizontalschenkel 37 aufliegt und seitlich durch die vertikalen Schenkel 38 lagestabilisiert in dem Aufnahmefach 28 gehalten ist. Soll das Tragebehältnis 10 zur Aufbewahrung eines Computers 29 abweichender Größe dienen, werden die Adapter-Einlagen 35 gegen solche entsprechend anderer Dimension ausgetauscht. Es handelt sich im übrigen um einfache Teile aus Kunststoff, z.B. Schaumstoff.

Wesentlich ist vor allem, daß der Computer 29, wie es Fig. 2 veranschaulicht, möglichst hoch im Innenraum des Kofferfachs 28 bereitgehalten wird, damit sich, wenn - entsprechend Fig. 4 - der Koffer geöffnet und der obere Frontwandteil 24 nach außen abgeklappt ist, der Computer aus seinem oberen Rand mit einer Hand leicht ergreifen und aus dem Koffer herausnehmen läßt.

Die Trennwand 26, die den Aufwandraum 28 für den Computer 29 gegen den Aufnahmeraum 30 für den Drucker 31 abteilt, ist in besonderer Weise ausgebildet und angeordnet. Sie besteht zunächst aus zwei Platten, deren behälterunterste den eigentlichen Trennwandteil 39 ausbildet und deren obere als Drucker-Tragkörper 40 dient. Trennwandteil 39 und Drucker-Tragkörper 40 sind über eine horizontale Schwenkachse 41 relativ zueinander schwenk- bzw. klappbar anordnet. In der in Fig. 2 dargestellten Drucker-Verstaulage sind beide plattenförmigen Körper 39 und 40 gemeinsam verschiebbar in Führungen 42 aufgenommen, die an den Innenseiten der Koffer-Seitenwände 13 angebracht sind.

Der Drucker 31 ist auf dem Drucker-Tragkörper 40 mit daran jeweils selbstklebend angehefteten Abschnitten eines Flächenreißverschlusses 43 (einem aus Flauschband und Hakenband bestehender Klettverschluß) lösbar befestigt. Die Höhe der Führungen 42 entspricht ungefähr dem Abstand der zwischen dem festen Frontwandteil 22 und dem abklappbaren Frontwandteil 24 vorgesehenen horizontalen Schwenkachse 23 vom Behälterboden 11.

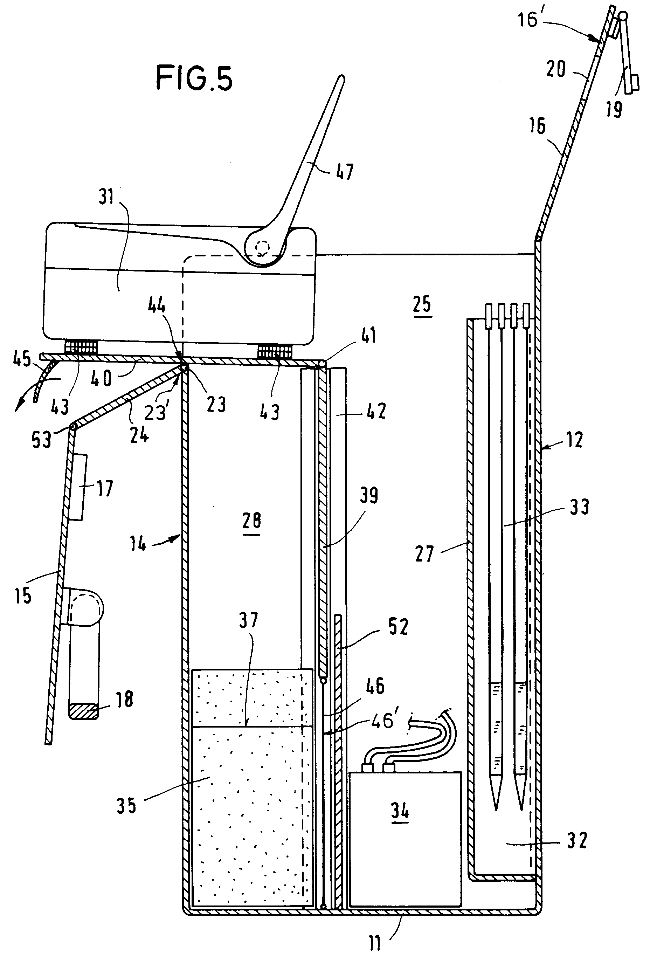

Mit dieser Anordnung wird folgendes erreicht:
Nach Öffnen des Deckels und Auswärtsbewegen der innenliegenden Deckelklappe 15 schwenkt der obere bewegliche Frontwandteil 24 um die festliegende Horizontalachse 23 nach außen/unten bis in die in Fig. 4 dargestellte Endlage. Der dabei entstandene Scheitelbereich 44 zwischen den beiden zu einem spitzen Winkel umgelegten Frontwandteilen 22 und 24 bildet nun eine Auflage für den entsprechend Fig. 5 in die Drucker-Bedienlage verschwenkten Drucker-Tragkörper 40 aus.

Um diese Position zu erreichen, wird die den Trennwandteil 39, die Schwenkachse 41 und den Drucker-Tragkörper 40 mit dem Drucker 31 umfassende Baugruppe an einem außenliegenden Griffelement 45 erfaßt und zunächst nach oben ein Stück aus dem Behälter 10 herausgezogen. Sobald die Schwenkachse 41 aus dem oberen Ende der Führungen 42 austritt, läßt sich der Druckertragkörper 40 mit dem Drucker 31 in eine im wesentlichen horizontale Lage ausschwenken (Fig. 4), bis der Drucker 31 entsprechend Fig. 5 seine endgültige Bedienposition eingenommen hat. Der Trennwandteil 39 ist dabei aufgrund seiner Gelenkverbindung 41 mit dem Drucker-Tragkörper 40 nach oben gezogen worden, verbleibt jedoch in den Führungen 42.

Um zu verhindern, daß die Baugruppe unwillentlich aus der kofferseitigen Halterung herausgezogen werden oder der Drucker aus seiner Bedienposition entsprechend Fig. 5 nach vorn herunterkippen unbeabsichtigt kann, ist das untere Ende des Trennwandteils 39 über eine Fessel 46, z.B. ein flexibles Band, mit dem Behälterboden 11 verbunden.

Wie weiterhin aus Fig. 5 ersichtlich ist, befindet sich der aus dem Behälter herausgezogene und in Bedienlage umgelegte Drucker 31 in einer ergonomisch sehr günstigen, weil weit vom Boden, auf dem der Behälter 10 aufsteht, beabstandeten Position. Besonders vorteilhaft ist auch die Abstützung des Drucker-Tragkörpers 40 an einer kofferfest verbleibenden, nicht vorklappbaren oder sonstwie verlagerungsfähigen Auflagerzone, nämlich auf dem frontwandteilfesten Scheitelbereich 44.

Im übrigen sind behälterseits noch Vorkehrungen getroffen, die es gestatten, daß beim Ausschwenken des Druckers 31 aus seiner vertikalen Verstaulage in die Bedienposition sich eine an ihm befindliche, schwenkbare Abdeckklappe 47 automatisch öffnen kann. Erreicht wird dies durch Freiräume, die zum einen dadurch geschaffen sind, daß die Trennwand 27 nicht bis unmittelbar unter den Deckel 15/16 nach oben gezogen ist, sondern hier einen Freiraum 48 beläßt und auch dadurch, daß die außenliegende Deckelklappe 16 um mehr als 90^{o} öffnen kann (Fig. 4). Wesentlich für das automatische Öffnen des Klappdeckels 47 ist einerseits, daß dessen Anlenkachse 49 bezüglich der in Fig. 2 dargestellten vertikalen Verstaulage des Druckers 31 unten liegt und daß die Klappdeckel-Scharnierung hinreichend leichtgängig ausgeführt ist. Es gibt handelsübliche Drucker, die dies gewährleisten und bei denen der Deckel 47 in aufgestellter Position (Fig. 5) zugleich als Papierstütze für das in den Drucker eingelegte Papier dient.

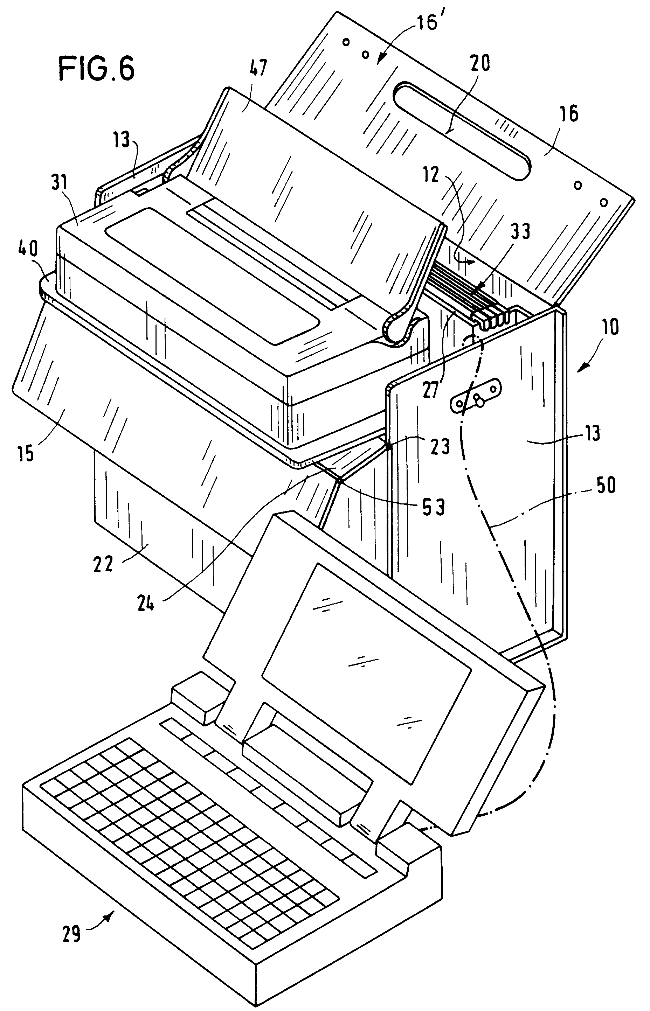

Die Handhabung des Computer-Koffers, ist, wie ersichtlich, äußerst einfach. Für die Arbeit mit dem Computer werden der Koffer 10 geöffnet, die außenliegende Deckelklappe 16 hochgestellt und die innenliegende Deckelklappe 15 mitsamt dem an ihm beweglich befestigten klappbaren Frontwandteil 24 etwa in die in Fig. 4 und 5 dargestellte Position ausgeklappt. Nun läßt sich der Computer 29 mit einer Hand an seinem im Behälter oben liegenden Rand ergreifen, aus dem Koffer nehmen und in günstiger Arbeitshöhe auf einen Tisch stellen, an dem der Benutzer Platz nimmt. Der Computer 29 bleibt währenddessen über ein Druckeranschlußkabel 50 mit dem Drucker 31 verbunden. Jetzt ergreift man die Handhabe 45 an der Trennwandanordnung 39/40, zieht daran nach oben und schließlich nach vorn (Pfeil 51 in Fig. 4) und bringt somit den Drucker 31 durch Hochziehen und Vorschwenken in seine Bedienposition entsprechend Fig. 5 bzw. Fig. 6. Diese Lage läßt sich aus der sitzenden Position des den Computer Bedienenden durch leichtes Vorbeugen zum Boden hin, auf dem der Koffer 10 steht, ohne weiteres und ohne Anstrengung erreichen.

Mit 52 ist noch eine Zusatz-Trennwand zwischen dem Computer-Aufnahmeraum 28 und dem Drucker-Aufnahmeraum 30 bezeichnet, die sich vom Boden 11 des Koffers 10 nur über einen Teil der Höhe hinwegerstreckt und den Sinn hat, die beiden Aufnahmeräume 28 und 29 im unteren Bereich gegeneinander abzugrenzen, wenn der Trennwandabschnitt 39 dies infolge seines hochgezogenen Zustandes nicht mehr gewährleisten kann (Fig. 4).

## Patentansprüche

1. Tragebehältnis wie Koffer, Tasche od. dgl. für einen tragbaren Computer, einen Drucker und Zubehör, wie Netzteil, Kabel, Maus, Druckerpapier od. dgl., mit einer Frontwand und einem in einem, ein Computer-Aufnahmefach von einem weiter im Behälterinnern gelegenen Drucker-Aufnahmefach abgrenzenden, in seitlichen Aufnahmen gehaltenen Trennwandteil, an dessen oberem Rand ein Drucker-Tragkörper zwischen einer im wesentlichen vertikalen Drucker-Verstaulage und einer zumindest annähernd horizontalen Drucker-Bedienlage um eine horizontale Achse umlegbar angelenkt ist, wobei nach Öffnen des Behältnis-Deckelteils zumindest ein Frontwandteil des Behältnisses ausklappbar angeordnet ist und dadurch Raum gibt zum erleichterten Ergreifen des Computers sowie zum Umlegen des Drucker-Tragkörpers, der nach Entnahme des Computers auf einem dem Frontwandteil zugeordneten Auflager in Bedienlage abstützbar ist, dadurch gekennzeichnet, daß die Frontwand (14) in einen festen, unteren Frontwandteil (22) und in einen um eine horizontale Achse (23) abklappbar an diesem angelenkten, oberen Frontwandteil (24) unterteilt ist und daß der bei abgeklapptem oberem Frontwandteil (24) von der Anlenkung (23) definierte Scheitelbereich (44) der Frontwandteile (22, 24) das Auflager zur Abstützung des Drucker-Tragkörpers (40) in der Drucker-Bedienlage ausbildet.

2. Tragebehältnis nach Anspruch 1, dadurch gekennzeichnet, daß die Höhe des abklappbaren, oberen Frontwandteils (24) nur einen geringen Anteil an der Gesamthöhe der Behältnisfront (14) bzw. des Behältnisses (10) ausmacht, daß sowohl der Trennwandteil (39) als auch der schwenkbar mit ihm verbundene Drucker-Tragkörper (40) vertikal verschieblich und führbar in den seitlichen Aufnahmen (42) angeordnet ist, deren obere Begrenzung etwa im gleichen Abstand vom Behältnisboden (11) endet, in dem sich der Scheitelbereich (44) befindet.

3. Tragebehältnis nach Anspruch 1 oder 2, dadurch gekennzeichnet, daß die Höhe des abklappbaren oberen Frontwandteils (24) nur etwa ein Fünftel der Gesamthöhe der Behältnisfront (14) bzw. des Behältnisses (10) beträgt.

4. Tragebehältnis nach einem der Ansprüche 1 bis 3, dadurch gekennzeichnet, daß der Drucker-Tragkörper (40) in Verstaulage des Druckers (31) allein durch formschlüssigen Eingriff mit den seitlichen Aufnahmen (42) gesichert ist.

5. Tragebehältnis nach einem der Ansprüche 1 bis 4, gekennzeichnet durch austauschbare Adapter-Einlagen (35), die den Computer (29) im wesentlichen formschlüssig im Computer-Aufnahmefach (28) des Behältnisses (10) positionieren und ihm eine griffgünstige/maximale Höhenposition innerhalb des Behältnisses (10) zuweisen.

6. Tragebehältnis nach Anspruch 5, dadurch gekennzeichnet, daß die austauschbaren Adapter-Einlagen (35) aus die Kofferecken innen ausfüllenden, im wesentlichen L-förmigen Formkörpern bestehen, deren Schenkelinnenseiten die unteren Eckbereiche des Computers zentrierend und vom Behältsnisboden (11) distanzierend umgreifen.

7. Tragebehältnis nach einem der Ansprüche 1 bis 4, dadurch gekennzeichnet, daß der Drucker-Tragkörper (40) aus einer dem Trennwandteil (39) ähnlichen Platte besteht, an der der Druckerboden mit lösbaren Haltemitteln (43), wie komplementären Abschnitten eines aus Flauschband und Hakenband bestehenden Flächenhaftverschlusses, abnehmbar befestigt ist.

8. Tragebehältnis nach einem der Ansprüche 1 bis 4, gekennzeichnet durch eine Sicherung gegen völliges Herausziehen des mit dem Drucker-Tragkörper (40) verbundenen Trennwandteils (39) aus den seitlichen Aufnahmen.

9. Tragebehältnis nach Anspruch 8, dadurch gekennzeichnet, daß die Sicherung aus einer zugfesten Fessel (46) wie Band besteht, die das Behältnis (10) mit dem Drucker-Tragkörper (40) und/oder dem an ihm angelenkten Trennwandteil (39) verbindet und so zurückhält, daß im wesentlichen nur der Drucker-Tragkörper (40) aus den seitlichen Aufnahmen (42) bis zum Erreichen seiner umlegfähigen Ausgangslage (Fig. 4) herausziehbar ist.

10. Tragebehältnis nach Anspruch 2 oder einem der folgenden, dadurch gekennzeichnet, daß seitlich neben dem Trennwandteil (39) ein zusätzlicher Trennwandabschnitt (52) bodenseits angeordnet ist, der den beim Hochziehen des Trennwandteils (39) entstehenden Spalt zwischen dem Computer-Aufnahmefach (28) und dem Drucker-Aufnahmefach (30) abdeckt.

11. Tragebehältnis nach Anspruch 1 oder einem der folgenden, dadurch gekennzeichnet, daß auf der dem Computer-Aufnahmefach (28) abgewandten Seite des Drucker-Aufnahmefachs (30) ein Freiraum (48) geschaffen ist, der das selbsttätige Aufklappen einer im unteren Bereich des hochgezogenen, jedoch noch vertikal orientierten Druckers (31) angelenkten Drucker-Abdeckklappe (47) ermöglicht.

12. Tragebehältnis nach Anspruch 11, mit einem auf der dem Computer-Aufnahmefach (29) abgewandten Seite des Drucker-Aufnahmefachs (30) vorgesehenen weiteren, mittels Trennwand (27) abgeteilten Staufachs (32), dadurch gekennzeichnet, daß der Freiraum (48) von einem ausklappbaren Deckelteil (16) des Behältnisses (10) und/oder dadurch geschaffen ist, daß die Trennwand (27) eine geringere Höhe als die Behältnisrückwand (12) aufweist.

13. Tragebehältnis nach einem der Ansprüche 1 bis 12, dadurch gekennzeichnet, daß an der Oberkante des abklappbaren oberen Frontwandteils (24) eine Deckelklappe (15) mit Tragegriff (18) klappbar angelenkt ist, die im geschlossenen Zustand des nach Art eines Pilotenkoffers ausgebildeten Tragebehältnisses (10) von einer einen Durchbruch (20) für den Tragegriff (18) und Verschlußteile (19) aufweisenden Überfall-Deckelklappe (16) mindestens teilüberdeckbar ist.
